# EUROPÄISCHE PATENTSCHRIFT

(11) **EP 3 714 277 B1**
(45) Veröffentlichungstag und Bekanntmachung des Hinweises auf die Patenterteilung: **13.10.2021**
(21) Anmeldenummer: 18808258.0
(22) Anmeldetag: 19.11.2018
(51) Int. Cl.: G01N 35/10, B01L 9/00

(54) **PIPETTIERVORRICHTUNG MIT DOPPELSEITIG NUTZBARER STATOR-MAGNETANORDNUNG ALS TEIL EINES LINEARMOTORISCHEN ANTRIEBS EINER PIPETTIEREINHEIT**
PIPETTING DEVICE WITH A STATOR MAGNET ASSEMBLY, WHICH CAN BE USED ON BOTH SIDES, AS PART OF A LINEAR-MOTOR DRIVE OF A PIPETTING UNIT
DISPOSITIF DE PIPETTAGE COMPRENANT UN ENSEMBLE D'AIMANTS DE STATOR POUVANT ÊTRE UTILISÉ DES DEUX CÔTÉS EN TANT QUE PIÈCE D'UN ENTRAÎNEMENT PAR MOTEUR LINÉAIRE D'UNE UNITÉ DE PIPETTAGE

(30) Priorität: 22.11.2017 DE 102017220892
(43) Veröffentlichungstag der Anmeldung: 30.09.2020
(73) Patentinhaber: Hamilton Bonaduz AG, 7402 Bonaduz (CH)
(72) Erfinder: ROMER, Hanspeter, 8340 Hinwil (CH); WALPEN, Silvio, CH-8712 Stäfa (CH); GYSEL, Fridolin, 8134 Adliswil (CH)
(74) Vertreter: Ruttensperger Lachnit Trossin Gomoll
(86) Internationale Anmeldenummer: PCT/EP2018/081711
(87) Internationale Veröffentlichungsnummer: WO 2019/101675

(56) Entgegenhaltungen:
- EP-A1- 1 321 222
- EP-A1- 2 656 083
- DE-A1-102012 216 544

## Beschreibung

Die vorliegende Erfindung betrifft eine Pipettiervorrichtung mit:
- wenigstens einer Pipettiereinheit, welche einen Pipettierkanal aufweist,
- einer Führungsanordnung mit wenigstens einer Führungsschiene, an welcher die wenigstens eine Pipettiereinheit zur Bewegung längs einer Bewegungsachse geführt ist, und mit
- einer Linearantriebsanordnung, durch welche die wenigstens eine Pipettiereinheit zur Bewegung längs der Bewegungsachse antreibbar ist,
wobei die Linearantriebsvorrichtung einen relativ zur Führungsanordnung ortsfesten Stator aufweist und wobei die Pipettiereinheit einen relativ zum Stator längs der Bewegungsachse beweglichen Läufer der Linearantriebsanordnung bildet, wobei der Stator eine fest mit der Führungsanordnung verbundene Stator-Magnetanordnung aufweist, wobei die Stator-Magnetanordnung eine Mehrzahl von Magneten umfasst, die längs der Bewegungsachse mit alternierender Magnetpolausrichtung aufeinander folgend angeordnet sind, und wobei der Läufer wenigstens eine bestrombare elektromagnetische Läufer-Magnetanordnung aufweist, welche der Stator-Magnetanordnung längs einer zur Bewegungsrichtung orthogonalen Spaltachse gegenüberliegt.

Pipettiervorrichtungen dienen als Laborgeräte zum Aspirieren und Dispensieren (Pipettieren) von Flüssigkeiten, sowie gewünschtenfalls zwischen dem Aspirieren und Dispensieren auch dem Transport einer aspirierten Flüssigkeit von einem Ort zu einem anderen. Pro vorhandenem Pipettierkanal ist ein Pipettiervorgang möglich.

Eine Pipettiervorrichtung der eingangs genannten Art ist beispielsweise bekannt aus der EP 2 656 083 A. Diese Druckschrift zeigt eine Pipettiervorrichtung mit einer Mehrzahl von Pipettiereinheiten, welche durch die Führungsanordnung längs der Bewegungsachse beweglich geführt sind. Die bekannte Pipettiervorrichtung weist zwei Führungsanordnungen auf, welche jeweils zueinander parallele Bewegungsachsen definieren. Jede Führungsanordnung weist zwei an einem gemeinsamen Gerüst getragene Führungsschienen und zwei am selben Gerüst getragene Stator-Magnetanordnungen auf.

Jede Pipettiereinheit der bekannten Pipettiervorrichtung ist an genau einer Führungsschiene geführt, wobei zwei am selben Gerüst angeordnete Pipettiereinheiten, die längs der Bewegungsachse unmittelbar aufeinanderfolgen, alternierend an unterschiedlichen Führungsschienen geführt sind, um diese Pipettiereinheiten einander längs der Bewegungsachse möglichst nahe annähern zu können. In der Regel weisen nämlich sowohl die gemeinsam mit den Pipettiereinheiten beweglichen Führungswagen oder -schlitten als auch die Läufer-Magnetanordnungen in Richtung der Bewegungsachse größere Abmessungen auf als die den Pipettierkanal ausbildenden Bauteile der Pipettiereinheit. Die gesonderte Bestromung der Läufer-Magnetanordnung unterschiedlicher Pipettiereinheiten ermöglicht, die Pipettiereinheiten unabhängig voneinander zur Bewegung anzutreiben.

Durch die Führung an unterschiedlichen Führungsschienen, können sich den unmittelbar aufeinanderfolgenden Pipettiereinheiten zugeordnete Führungswagen oder Führungsschlitten axial, also längs der Bewegungsachse, überlappen. Aus demselben Grunde wirken die Läufer-Magnetanordnungen von längs der Bewegungsachse unmittelbar aufeinanderfolgenden Pipettiereinheiten alternierend mit unterschiedlichen Stator-Magnetanordnungen zusammen. Auf diese Weise können sich auch die axial unmittelbar auf einander folgenden Läufer-Magnetanordnungen axial überlappen und so eine größere Annäherung der Pipettiereinheiten längs der Bewegungsachse aneinander ermöglichen.

Dieses Prinzip wird bei der aus der EP 2 656 083 A bekannten Pipettiervorrichtung über die beiden dort offenbaren Gerüste hinweg realisiert. So kann eine große Anzahl von in einer gemeinsamen Ebene liegenden, zueinander parallelen Pipettierkanälen längs der Bewegungsachse einander stark angenähert werden. Die gemeinsame Ebene der Pipettierkanäle liegt dabei äquidistant zwischen den beiden Gerüsten.

So kann eine Kollision von längs der Bewegungsachse einander nahen Pipettiereinheiten bzw. von deren Komponenten verhindert werden, indem axial aufeinander folgende Pipettiereinheiten nicht nur an unterschiedlichen Führungsschienen, sondern an unterschiedlichen Führungsschienen unterschiedlicher Gerüste geführt sind. So ist in der Reihe von längs der Bewegungsachse angeordneten Pipettiereinheiten, wenn man sie beginnend bei der äußersten Pipettiereinheit mit "1" aufsteigend fortlaufend durchnummeriert denkt, eine Untergruppe mit allen Pipettiereinheiten ungerader Nummer am einen Gerüst geführt, und eine Untergruppe mit allen Pipettiereinheiten gerader Nummer am jeweils anderen Gerüst geführt. Innerhalb einer Untergruppe sind längs der Bewegungsachse aufeinanderfolgende Pipettiereinheiten alternierend an jeweils einer anderen der zwei Führungsschienen des Gerüsts geführt.

Was oben für die Führung der Pipettiereinheiten an unterschiedlichen Führungsschienen gesagt ist, gilt für den Antrieb der Pipettiereinheiten im Zusammenwirken mit unterschiedlichen Stator-Magnetanordnungen entsprechend. Die Zuordnung von Läufer-Magnetanordnungen zu Stator-Magnetanordnungen, die im gleichen Zahlenverhältnis wie bewegliche Führungswagen zu Führungsschienen vorhanden sind, entspricht jener von Führungswagen bzw. Führungsschlitten zu Führungsschienen: jedes Gerüst der bekannten Pipettiervorrichtung trägt zwei Stator-Magnetanordnungen und jede Pipettiereinheit eine Läufer-Magnetanordnung. Die Läufer-Magnetanordnungen von längs der Bewegungsachse unmittelbar aufeinander folgenden Pipettiereinheiten wirken mit Stator-Magnetanordnungen an unterschiedlichen Gerüsten zusammen. Die Läufer-Magnetanordnungen der an ein und demselben Gerüst geführten und angetriebenen Pipettiereinheiten sind längs der Bewegungsachse alternierend jeweils einer anderen Stator-Magnetanordnung gegenüberliegend und mit dieser zusammenwirkend angeordnet.

Zwar kann mit dieser Anordnung eine sehr nahe Annäherung von Pipettiereinheiten längs der Bewegungsachse erzielt werden, jedoch ist für diese starke Annäherung ein erheblicher Bauraum notwendig.

Es ist daher Aufgabe der vorliegenden Erfindung, die eingangs genannte Pipettiervorrichtung derart weiterzubilden, dass im Wesentlichen die gleiche Annäherung von längs der Bewegungsachse aufeinanderfolgenden Pipettiereinheiten längs dieser Bewegungsachse bei gleichzeitig verringerter Bauraumanforderung der Pipettiervorrichtung insgesamt möglich ist.

Diese Aufgabe wird erfindungsgemäß gelöst durch eine Pipettiervorrichtung der eingangs genannten Art, welche wenigstens zwei Läufer-Magnetanordnungen aufweist, die mit derselben, gemeinsamen Stator-Magnetanordnung Antriebskraft erzeugend zusammenwirken und die längs einer zur Bewegungsachse orthogonalen Abstandsachse mit Abstand voneinander angeordnet sind, wobei sich die gemeinsame Stator-Magnetanordnung zwischen den wenigstens zwei Läufer-Magnetanordnungen befindet.

Durch die beschriebene Anordnung von Läufer-Magnetanordnungen, die längs der Bewegungsachse mit Abstand voneinander angeordnet sein können, aber wie nachfolgend gezeigt wird nicht müssen, die jedoch längs der zur Bewegungsachse orthogonalen Abstandsachse mit Abstand voneinander angeordnet sind, kann die Stator-Magnetanordnung raumsparend zwischen den so längs der Abstandsachse mit Abstand voneinander angeordneten Läufer-Magnetanordnungen angeordnet sein. In der Folge kann das von ein und derselben Stator-Magnetanordnung ausgehende Magnetfeld auf unterschiedlichen, vorzugsweise entgegengesetzten, Seiten der Stator-Magnetanordnung von den längs der Abstandachse mit Abstand voneinander angeordneten Läufer-Magnetanordnungen zur Erzeugung von Antriebskraft genutzt werden.

In den Pipettiervorrichtungen des Standes der Technik wurde das von einer Stator-Magnetanordnung ausgehende Magnetfeld nur auf einer Seite der Stator-Magnetanordnung genutzt. Jene Seite einer Stator-Magnetanordnung, der längs der Spaltachse eine oder mehrere Läufer-Magnetanordnungen gegenüberliegen, sei nachfolgend als "Magnetpol-Wirkseite" bezeichnet. Die Stator-Magnetanordnung der vorliegend vorgestellten Pipettiervorrichtung weist im Gegensatz zu jener der bekannten Pipettiervorrichtung zwei Magnetpol-Wirkseiten auf.

Zur vorteilhaften störungsarmen Bewegung einer Läufer-Magnetanordnung längs der Magnetpol-Wirkseite der der Läufer-Magnetanordnung zugeordneten Stator-Magnetanordnung bei sehr geringem möglichem Spaltmaß des zwischen Läufer-und Stator-Magnetanordnung gebildeten Luftspalts ist die Magnetpol-Wirkseite bevorzugt an einer zur Bewegungsachse parallelen, daher besonders bevorzugt ebenen, Außenfläche der Stator-Magnetanordnung ausgebildet. Gemäß einer bevorzugten Weiterbildung der vorliegenden Erfindung sind beide Magnetpol-Wirkseiten ein und derselben Stator-Magnetanordnung an zueinander parallelen Außenflächen der Stator-Magnetanordnung ausgebildet.

Zwar kann die Stator-Magnetanordnung Elektromagnete umfassen. Bevorzugt sind die Magnete der Stator-Magnetanordnung jedoch Permanentmagnete.

Während bei Stator-Magnetanordnungen von bekannten Pipettiervorrichtungen die der einzigen Magnetpol-Wirkseite entgegengesetzte Außenfläche der Stator-Magnetanordnung zur Befestigung der Stator-Magnetanordnung mit einem Tragbauteil verbunden ist, beispielsweise durch Verkleben, liegen bei der Stator-Magnetanordnung der vorliegend vorgestellten Pipettiervorrichtung beide Magnetpol-Wirkseiten bildende Außenflächen bevorzugt wenigstens abschnittsweise frei.

Zwar kann das Tragbauteil dann, wenn es aus ferromagnetischem Material ausgebildet ist, als magnetisches Rückschlussbauteil verwendet werden, was bei der nun beschriebenen doppelseitig wirkenden Stator-Magnetanordnung nicht mehr der Fall ist. Jedoch hat sich gezeigt, dass zur Bereitstellung von ausreichender Antriebskraft für eine verhältnismäßig massearme Pipettiereinheit das von einer Stator-Magnetanordnung bereitgestellte Magnetfeld auch ohne Rückschlussbauteil ausreicht.

Es bestehen grundsätzlich zwei unterschiedliche Möglichkeiten, den durch die doppelseitig, also mit zwei Magnetpol-Wirkseiten, wirkende und doppelseitig genutzte Stator-Magnetanordnung gewonnenen Vorteil zu nutzen: zum einen kann bei ansonsten gleicher Abmessung der Pipettiereinheit die auf eine einzelne Pipettiereinheit wirkende Antriebskraft längs der Bewegungsachse erhöht werden, wenn die Pipettiereinheit zwei längs der Abstandsachse voneinander entfernt angeordnete Läufer-Magnetanordnungen aufweist, zwischen welchen die Stator-Magnetanordnung angeordnet ist. Dann kann jede dieser Läufer-Magnetanordnungen mit einer anderen Magnetpol-Wirkseite ein und derselben Stator-Magnetanordnung zur Erzeugung einer Antriebskraft zusammenwirken.

Zum anderen, und dies ist die bevorzugte Art der Nutzung, kann neben der Antriebskraft vergrößernden Wirkung bei gleicher Anzahl an Pipettiereinheiten eine die Abmessung verkleinernde Wirkung erzielt werden oder es kann bei gleicher Abmessung der Pipettiervorrichtung die Anzahl der antreibbaren Pipettiereinrichtungen erhöht werden. Dann umfasst die Pipettiervorrichtung wenigstens zwei gesonderte Pipettiereinheiten, welche jeweils einen Pipettierkanal aufweisen und von welchen jede an der Führungsanordnung längs der Bewegungsachse zur Bewegung geführt ist. Dabei weisen unterschiedliche Pipettiereinheiten je wenigstens, vorzugsweise genau eine Läufer-Magnetanordnung auf, wobei die Läufer-Magnetanordnungen unterschiedlicher Pipettiereinheiten längs der Abstandsachse mit Abstand voneinander angeordnet sind. Zwischen diesen befindet sich die gemeinsame Stator-Magnetanordnung.

Dann ist es nämlich möglich, die Läufer-Magnetanordnungen von längs der Bewegungsachse unmittelbar aufeinander folgenden Pipettiereinheiten, welche durch Zusammenwirken mit ein und dieselben Stator-Magnetanordnung zur Bewegung angetrieben werden, alternierend der einen und der anderen Magnetpol-Wirkseite derselben Stator-Magnetanordnung gegenüberliegend anzuordnen. Dann befinden sich die Läufer-Magnetanordnungen von längs der Bewegungsachse mit ein und derselben Stator-Magnetanordnung zusammenwirkenden Pipettiereinheiten alternierend auf unterschiedlichen Seiten der Stator-Magnetanordnung. Sie können folglich nicht kollidieren. Denkt man die Pipettiereinheiten, die längs ein und derselben Stator-Magnetanordnung mit dieser zur Erzielung einer Antriebskraft zusammenwirken, mit "1" beginnend aufsteigend nummeriert, so können sich die Läufer-Magnetanordnungen aller Pipettiereinheiten mit ungeraden Nummern auf der einen Seite der Stator-Magnetanordnung befinden und ihrer einen Magnetpol-Wirkseite gegenüberliegen und somit mit dieser zusammenwirken. Ebenso können sich die Läufer-Magnetanordnungen aller Pipettiereinheiten mit geraden Nummern auf der jeweils anderen Seite der Stator-Magnetanordnung befinden und ihrer anderen Magnetpol-Wirkseite gegenüberliegen und folglich mit dieser zusammenwirken.

Dann, wenn die Pipettiervorrichtung eine Mehrzahl von Pipettiereinheiten aufweist, was für die meisten Pipettiervorrichtungen in der Praxis der Fall sein wird, liegen die parallelen Pipettierkanäle der Mehrzahl von Pipettiereinheiten vorzugsweise in einer gemeinsamen Pipettierkanal-Ebene, die parallel zur Bewegungsachse verläuft. Bevorzugt, aber nicht notwendigerweise, verläuft die Pipettierkanal-Ebene orthogonal zur Abstandsachse. Die Pipettiervorrichtung kann jedoch auch derart aufgebaut sein, dass die Pipettierkanal-Ebene parallel zur Abstandsachse orientiert ist.

Grundsätzlich kann die Stator-Magnetanordnung eine beliebige Querschnittsgestalt aufweisen, wobei der Querschnitt der Stator-Magnetanordnung längs der Bewegungsachse vorzugsweise hinsichtlich Größe und Gestalt konstant ist. Bevorzugt hat die Stator-Magnetanordnung eine quaderförmige oder quaderähnliche Gestalt. Daher weist die Stator-Magnetanordnung wenigstens zwei parallele ebene Außenflächen auf, welche jeweils eine Magnetpol-Wirkseite der Stator-Magnetanordnung bilden. Die längste Abmessung weist die Stator-Magnetanordnung bevorzugt längs der Bewegungsachse auf, um einen möglichst langen Bewegungsweg der Pipettiereinheiten zu ermöglichen. Zur Erzielung eines möglichst geringen Bauraumbedarfs weist die Stator-Magnetanordnung bevorzugt ihre kürzeste Abmessung als Dickenabmessung zwischen den beiden Magnetpol-Wirkseiten auf. Die Dickenrichtung ist zur Bewegungsachse orthogonal. Die Breitenabmessung der Stator-Magnetanordnung, orthogonal zur Bewegungsachse und orthogonal zur Dickenabmessung, ist ein Maß für die mögliche Flächenüberdeckung zwischen Läufer- und Stator-Magnetanordnung. Sie liegt bevorzugt zwischen dem vier- und dem zehnfachen der Dickenabmessung.

Ausgehend von der bevorzugten Gestalt der Stator-Magnetanordnung sind gemäß einer bevorzugten Weiterbildung der vorliegenden Erfindung die Spaltachsen, längs welcher die längs der Abstandsachse mit Abstand voneinander angeordneten Läufer-Magnetanordnungen der gemeinsamen Stator-Magnetanordnung gegenüberliegen, zueinander parallel. Dadurch kann die aus Stator-Magnetanordnung und einer Mehrzahl von Läufer-Magnetanordnungen gebildete Linearantriebsanordnung mit geringem Bauraum realisiert werden.

Zur Erzielung möglichst gleicher Kraftverhältnisse an beiden Magnetpol-Wirkseiten kann die Einhaltung einer oder mehrerer Symmetriebedingungen hilfreich sein: beispielsweise kann die gemeinsame Stator-Magnetanordnung, die unterschiedliche Magnetpol-Wirkseiten aufweist, bezüglich einer zur Bewegungsachse parallelen Längsmittelebene körperlich spiegelsymmetrisch ausgebildet sein. Hierbei ist die magnetische und die körperliche Symmetrie zu unterscheiden. Ein Bauteil ist magnetisch symmetrisch, wenn es beiderseits der Symmetrieebene gleichnamige magnetisierte Bereiche mit symmetrischer Bereichsgestalt aufweist. Ein Bauteil ist dagegen körperlich symmetrisch, wenn es beiderseits der Symmetrieebene symmetrische Körperbereiche aufweist.

Die oben bezeichnete körperliche Symmetrie sorgt dafür, dass beiderseits der Längsmittelebene die gleiche Masseverteilung herrscht, was unabhängig von der jeweiligen lokalen Magnetisierung ermöglicht, dass beiderseits der Längsmittelebene längs der Bewegungsachse eine etwa gleiche Magnetfeldstärken-Verteilung erzielbar ist. Bevorzugt ist die Stator-Magnetanordnung bezüglich der Längsmittelebene nur körperlich symmetrisch, nicht jedoch magnetisch symmetrisch. Bevorzugt sind die Magnete der Stator-Magnetanordnung mit orthogonal zur Längsmittelebene verlaufenden Polarisierungsrichtungen polarisiert. Dies bedeutet, dass in einer bevorzugten Ausführungsform der Grenzbereich zwischen ungleichnamigen Magnetpolen in der Längsmittelebene liegt. Dann ist die Stator-Magnetanordnung bezüglich der Längsmittelebene magnetisch unsymmetrisch, da an einem Ort der Längsmittelebene zu beiden Seiten derselben ungleichnamige Polbereiche liegen.

Bevorzugt ist die genannte Längsmittelachse nicht nur zur Bewegungsachse parallel, sondern ist auch zu den bevorzugt parallelen Magnetpol-Wirkseiten bildenden Außenflächen parallel. Die genannte Längsmittelachse ist daher bevorzugt orthogonal zur Dickenrichtung der Stator-Magnetanordnung.

Da gemäß physikalischer Modelle an freien Außenflächen von Magneten Magnetfeldlinien in der Regel orthogonal zu diesen verlaufen, kann auf eine Läufer-Magnetanordnung wirkende Antriebskraft besonders effizient dann erzielt werden, wenn die Spaltachse, längs welcher die Läufer-Magnetanordnung der Magnetpol-Wirkseite der Stator-Magnetanordnung gegenüberliegt, orthogonal zu der die Magnetpol-Wirkseite bildenden Außenfläche oder/und orthogonal zur Längsmittelebene verläuft. Dies gilt für beiderseits einer gemeinsamen Stator-Magnetanordnung angeordnete Läufer-Magnetanordnungen, welche unterschiedlichen Magnetpol-Wirkseiten gegenüberliegen.

Weiter ist es zur Erzielung einheitlicher Kraftwirkungen an den unterschiedlichen Magnetpol-Wirkseiten gegenüberliegenden Läufer-Magnetanordnungen vorteilhaft, wenn die gemeinsame Stator-Magnetanordnung bezüglich einer sowohl zur Bewegungsachse als auch zur Dickenrichtung der gemeinsamen Stator-Magnetanordnung parallelen Breiten-Symmetrieebene der gemeinsamen Stator-Magnetanordnung magnetisch spiegelsymmetrisch ausgebildet ist. Die Breiten-Symmetrieebene ist vorzugsweise zu der oben genannten Längsmittelebene orthogonal orientiert. Unter Einhaltung der zuletzt genannten Symmetriebedingung liegt an einem vorgegebenen Ort längs der Bewegungsachse beiderseits der Breiten-Symmetrieebene auf ein und derselben Magnetpol-Wirkseite nur ein Magnetpol. Der andere Magnetpol liegt auf der anderen Magnetpol-Wirkseite. Zu dieser magnetischen Spiegelsymmetrie kann eine körperliche Spiegelsymmetrie bezüglich der Breiten-Symmetrieebene hinzutreten. Die Stator-Magnetanordnung kann daher körperlich bezüglich zwei zueinander orthogonalen Ebenen, nämlich der Längsmittelebene und der Breiten-Symmetrieebene spiegelsymmetrisch ausgebildet sein.

Zur Erzielung einer möglichst einheitlichen Kraftwirkung an einer Mehrzahl von Läufer-Magnetanordnungen unabhängig von der ihnen zugeordneten Magnetpol-Wirkseite, ist es bevorzugt, wenn die Spaltachsen zur Abstandsachse parallel sind. Dies ist bei der besonders bevorzugten Ausführungsform mit zueinander parallelen unterschiedliche Magnetpol-Wirkseiten bildenden Außenflächen der Fall, wenn jeder Außenfläche der Stator-Magnetanordnung die Läufer-Magnetanordnungen mit zur Außenfläche parallelen Endflächen gegenüberliegen.

Mit dem Begriff "Spaltachse" ist in der vorliegenden Anmeldung eine Achse bezeichnet, welche zwischen einer zur Magnetpol-Wirkseite der Stator-Magnetanordnung hinweisenden Endfläche einer Läufer-Magnetanordnung und einer zur Läufer-Magnetanordnung hinweisenden, eine Magnetpol-Wirkseite bildenden Außenfläche der Stator-Magnetanordnung verläuft. Sind, wie im bevorzugten Fall, die Endfläche und die Außenfläche zueinander parallel, ist die Spaltachse die Normale auf End- und Außenfläche. Schließen die Endfläche und die Außenfläche weniger bevorzugt einen Winkel ein, so soll die Spaltachse im Zweifel eine Normale auf eine winkelhalbierende Fläche zwischen Endfläche und Außenfläche sein.

Einheitliche magnetische Wirkungen und damit gleiche Kraftwirkungen an den mit unterschiedlichen Magnetpol-Wirkseiten zusammenwirkenden beweglichen Läufer-Magnetanordnungen können dadurch erreicht werden, dass die Polarisierungsrichtungen der Magnete der gemeinsamen Stator-Magnetanordnung parallel zu den Spaltachsen verlaufen. Im Falle der oben genannten Längsmittelebene als körperlicher Spiegelsymmetrieebene sind die Polarisierungsrichtungen der Magnete der gemeinsamen Stator-Magnetanordnung bevorzugt parallel zur Längsmittelebene. Dadurch kann auch die magnetische Spiegelsymmetrie zu der oben genannten Breiten-Symmetrieebene erreicht werden.

Für eine möglichst stabile und dauerhafte Ausbildung der Stator-Magnetanordnung kann diese auf wenigstens einer ihrer Magnetpol-Wirkseiten bildenden Außenflächen, aus Symmetriegründen bevorzugt auf beiden solchen Außenflächen eine Stützleiste aus einem unmagnetischen, also insbesondere nicht ferromagnetischen Material aufweisen. Zur Vermeidung eines unerwünscht hohen magnetischen Widerstands zwischen einer solchen Außenfläche und der ihr gegenüberliegenden Läufer-Magnetanordnung sollte eine solche Stützleiste jedoch dünn ausgeführt sein und kann daher nur wenig Stabilisierung für die Stator-Magnetanordnung bieten. Bevorzugt liegen die Magnetpol-Wirkseiten bildenden Außenflächen der Stator Magnetanordnung zur Erzielung möglichst geringer magnetischer Widerstände über den mit den Läufer-Magnetanordnungen gebildeten Luftspalt hinweg frei.

Zur möglichst stabilen Bereitstellung der unter der stetigen Wirkung von Magnetkräften stehenden Stator-Magnetanordnung kann der Stator eine längs der Bewegungsachse verlaufende Halteleiste aufweisen, welche mit längs der Bewegungsachse aufeinander folgenden Magneten der gemeinsamen Stator-Magnetanordnung mechanisch oder/und adhäsiv verbunden ist. Bevorzugt steht die Halteleiste nicht über eine Magnetpol-Wirkseite der Stator-Magnetanordnung über. Daher ist die Halteleiste besonders bevorzugt wenigstens nicht dicker, noch stärker bevorzugt dünner ausgebildet als die Stator-Magnetanordnung.

Zur weiteren Erhöhung der Stabilität der Stator-Magnetanordnung kann der Stator in Entfernung von der - dann ersten - Halteleiste eine zu dieser parallele zweite Halteleiste aufweisen, welche mit längs der Bewegungsachse aufeinander folgenden Magneten der gemeinsamen Stator-Magnetanordnung mechanisch oder/und adhäsiv verbunden ist, wobei die Halteleiste und die zweite Halteleiste die Stator-Magnetanordnung zwischen sich halten. Bevorzugt sind die Halteleisten längs der oben genannten Breitenabmessung der Stator-Magnetanordnung mit Abstand voneinander angeordnet. Für die zweite Halteleiste gilt das in der vorliegenden Anmeldung zur ersten Halteleiste Gesagte.

Damit die Halteleiste und die zweite Halteleiste die Läufer-Magnetanordnungen möglichst wenig stören, ist es bevorzugt, wenn die Halteleiste und die zweite Halteleiste sowohl orthogonal zur Bewegungsachse als auch orthogonal zu den Spaltachsen der mit der gemeinsamen Stator-Magnetanordnung zusammenwirkenden Läufer-Magnetanordnungen mit Abstand voneinander angeordnet sind. Aus dem gleichen Grunde ist bevorzugt, dass die Halteleiste und die zweite Halteleiste orthogonal zur Abstandsachse voneinander entfernt angeordnet sind.

Um die Stator-Magnetanordnung zu stabilisieren, müssen die Halteleiste oder/und die zweite Halteleiste Kraft auf die Magnete der Stator-Magnetanordnung ausüben können. Hierzu kann vorgesehen sein, dass die Halteleiste oder/und die zweite Halteleiste einen Fixierspalt oder eine Fixiernut definieren, in welchen bzw. in welche ein von der Stator-Magnetanordnung auskragender Fixiervorsprung einragt. Der Fixiervorsprung kann einstückig mit der Stator-Magnetanordnung ausgebildet sein, etwa durch entsprechende Ausgestaltung der einzelnen Magnete. Allerdings sind die als Magnete bevorzugten Permanentmagnete materialbedingt häufig spröde und neigen unter nur lokaler äußerer Krafteinwirkung zum Bruch. Daher kann es vorteilhaft sein, wenn der Fixiervorsprung an einer ersten Teil-Leiste der Halteleiste oder/und zweiten Halteleiste ausgebildet ist. Die erste Teil-Leiste ist dabei aus unmagnetischem Material hergestellt und mit den Magneten der Stator-Magnetanordnung verbunden, insbesondere verklebt. Die erste Teil-Leiste kann beispielsweise ein T-förmiges Profil aufweisen, wobei der Querschenkel mit der Stator-Magnetanordnung verbunden sein kann, insbesondere mit deren längs der Bewegungsachse und in Dickenrichtung verlaufenden Schmalseite, sodass der etwa mittig von dem mit der Stator-Magnetanordnung verbundenen Querschenkel auskragende Längsschenkel des T-Profils als Fixiervorsprung dienen kann. Eine zweite Teil-Leiste der Halteleiste oder/und zweiten Halteleiste kann dann eine Nut aufweisen, in die der Längsschenkel eintaucht.

Zur Auswahl möglichst geeigneter Materialien und insbesondere zur Vermeidung von Induktionswirkungen, wie etwa einer Ausbildung von Wirbelströmen, in der Halteleiste oder/und in der zweiten Halteleiste durch die relativ zu der Halteleiste oder/und der zweiten Halteleiste beweglichen Läufer-Magnetanordnungen kann die Halteleiste oder/und die zweite Halteleiste aus einer Mehrzahl von Lamellen-Leistenbauteilen aufgebaut sein. Die Lamellen-Leistenbauteile sind bevorzugt in einer zur Bewegungsachse orthogonalen Anlagerichtung aufeinander folgend angeordnet. Die Anlagerichtung, längs welcher die Lamellen-Leistenbauteilen gestapelt sind, verläuft bevorzugt parallel zu den Spaltachsen oder/und zur Dickenrichtung der Stator-Magnetanordnung, wobei die Spaltachsen und die Dickenrichtung bei der besonders bevorzugten Ausführungsform parallel sind. Durch entsprechend unterschiedlich bemessene Lamellen-Leistenbauteile kann außerdem der oben beschriebene Fixierspalt bzw. Fixiernut bereits bei der Herstellung durch Stapeln der Lamellen-Leistenbauteile in einfacher Weise gebildet werden. Die Halteleiste oder/und die zweite Halteleiste oder wenigstens eine, bevorzugt alle der Lamellen-Leistenbauteile sind gemäß einer bevorzugten Weiterbildung aus nicht-rostendem Stahl hergestellt, vorzugsweise aus austenitischem Stahl. Besonders bevorzugt ist nicht-rostender Stahl der Werkstoff-Nr. 1.4301.

Wie bereits oben angedeutet, weist die Pipettiervorrichtung bevorzugt eine Mehrzahl von Pipettiereinheiten auf, wobei deren Pipettierkanäle ebenso bevorzugt in einer gemeinsamen, zur Bewegungsachse parallelen Pipettierkanal-Ebene gelegen sind. Üblicherweise kragt die Mehrzahl von Pipettiereinheiten, bevorzugt kragen alle Pipettiereinheiten, zur selben Seite der sie zur Bewegung längs der Bewegungsachse führenden Führungsanordnung aus. Daher muss die Führungsanordnung nicht nur Kräfte orthogonal zur Bewegungsachse abstützen können, sondern auch Momente um die Bewegungsachse. Diese Momentenabstützung kann vorteilhaft dadurch erfolgen, dass jede Pipettiereinheit an zwei mit Abstand voneinander angeordneten Führungsschienen geführt ist. Gemäß einer bevorzugten Weiterbildung kann daher die Führungsanordnung wenigstens vier parallele Führungsschienen aufweisen, welche derart angeordnet sind, dass sie die Kanten einer Mantelfläche eines imaginären Prismas bilden. Für eine bevorzugte Weiterbildung der vorliegenden Erfindung gilt für eine Mehrzahl von Pipettiereinheiten, vorzugsweise für alle Pipettiereinheiten, zur Verbesserung der Annäherbarkeit von Pipettiereinheiten längs der Bewegungsachse bei gleichzeitig vorteilhaft großem Führungsabstand der Führungsorte der Pipettiereinheiten an ihren jeweiligen Führungsschienen, dass eine Pipettiereinheit an zwei Führungsschienen zur Bewegung geführt ist, zwischen welchen in jeder von zwei entgegengesetzten Umfangsrichtungen der Mantelfläche wenigstens eine weitere durch eine die jeweilige Pipettiereinheit nicht führende Führungsschiene definierte Prismenkante gelegen ist. Bevorzugt weist die Führungsanordnung zur Vermeidung unnötig hoher Bauteileanzahlen genau vier Führungsschienen auf. Ebenso ist aus Gründen des Bauraumbedarfs sowie im Hinblick auf an den Führungsschienen entstehenden möglichst gleich große Kräfte bevorzugt, wenn das Prisma ein Quader ist. Ebenfalls aus Gründen möglichst geringen Bauraumbedarfs ist die Stator-Magnetanordnung im Inneren des virtuellen Prismas angeordnet. Bevorzugt sind alle an der Führungsanordnung geführte Pipettiereinheiten wie oben beschrieben geführt.

Die Führungsanordnung mit den wenigstens vier, bevorzugt genau vier Führungsschienen, ist dabei bevorzugt von einem gemeinsamen Gerüst oder Gerüstabschnitt getragen.

Zur möglichst guten Annäherbarkeit der Pipettiereinheiten längs der Bewegungsachse sind gemäß einer bevorzugten Weiterbildung der vorliegenden Erfindung längs der Bewegungsachse unmittelbar aufeinander folgende Pipettiereinheiten an jeweils einem anderen Paar von Führungsschienen zur Bewegung geführt. Dabei ist es weiter bevorzugt, wenn sich längs derselben Führungsanordnung geführte Pipettiereinheiten, welche längs der Bewegungsachse unmittelbar auf einander folgen, keine Führungsschienen teilen, um diese Pipettiereinheiten einander längs der Bewegungsachse möglichst nah annähern zu können. Somit gilt besonders bevorzugt für jeweils zwei längs der Bewegungsachse unmittelbar aufeinander folgende Pipettiereinheiten, dass die sie jeweils führenden Paare von Führungsschienen keine gemeinsame Führungsschiene aufweisen.

Zur weiteren Verbesserung der Annäherbarkeit von längs der Bewegungsachse unmittelbar aufeinander folgenden Pipettiereinheiten kann die Pipettiervorrichtung eine Mehrzahl von Stator-Magnetanordnungen aufweisen. Die Stator-Magnetanordnungen sind mit einer zur Bewegungsachse orthogonalen Distanz voneinander angeordnet, um möglichst problemlos ein Zusammenwirken von Läufer-Magnetanordnungen mit ihren jeweils zugeordneten Magnetpol-Wirkseiten zu ermöglichen. Aus Gründen wiederum möglichst geringen Bauraumbedarfs ist die Mehrzahl von Stator-Magnetanordnungen bevorzugt in einer gemeinsamen Erstreckungsebene angeordnet. Bevorzugt umfasst die Mehrzahl genau zwei Stator-Magnetanordnungen. Die Mehrzahl von Stator-Magnetanordnungen und die wenigstens vier Führungsschienen der Führungsanordnung sind bevorzugt an ein und demselben Tragabschnitt des ortsfesten Gerüsts der Pipettiervorrichtung angeordnet.

Allgemein ausgedrückt weist die Pipettiervorrichtung zur Aufnahme einer möglichst großen Anzahl an Pipettiereinheiten bevorzugt n gesonderte Stator-Magnetanordnungen mit 2n Magnetpol-Wirkflächen auf. Dann sind die Läufer-Magnetanordnungen einer beliebigen Gruppe von 2n längs der Bewegungsachse unmittelbar auf einander folgenden Pipettiereinheiten jeweils unterschiedlichen Magnetpol-Wirkseiten zugeordnet und wirken mit diesen zur Erzielung einer Antriebskraft zusammen. Auf diese Weise können die Pipettiereinheiten einander längs der Bewegungsachse nah angenähert werden, vorzugsweise mit einem Pipettierkanalabstand von 9 mm oder weniger. Wie oben ausgeführt ist, ist bevorzugt n = 2.

Die vorliegende Erfindung wird nachfolgend anhand der beiliegenden Zeichnungen näher erläutert. Es stellt dar:
- Figur 1: eine grobschematische Draufsicht auf eine erfindungsgemäße Ausführungsform einer Pipettiervorrichtung,
- Figur 2: eine grobschematische Querschnittansicht durch die Ausführungsform von Figur 1 bei Betrachtung der Schnittfläche II-II in Figur 1,
- Figur 3: eine grobschematische, vergrößerte Querschnittansicht des Bereichs III in Figur 2, der besseren Übersichtlichkeit halber unter Weglassung von Pipettiereinheiten und Führungsschienen.

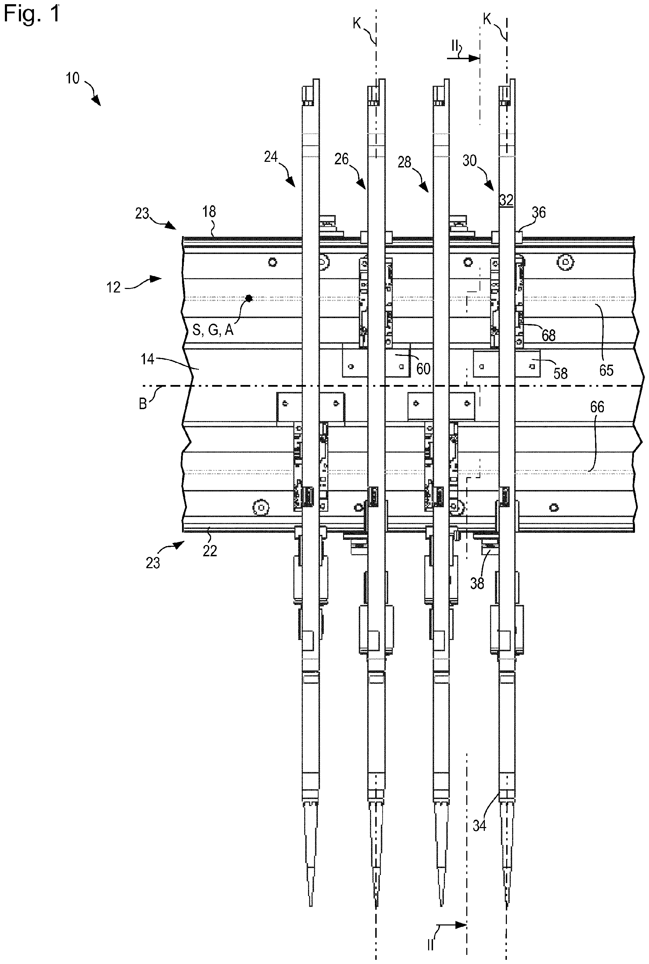

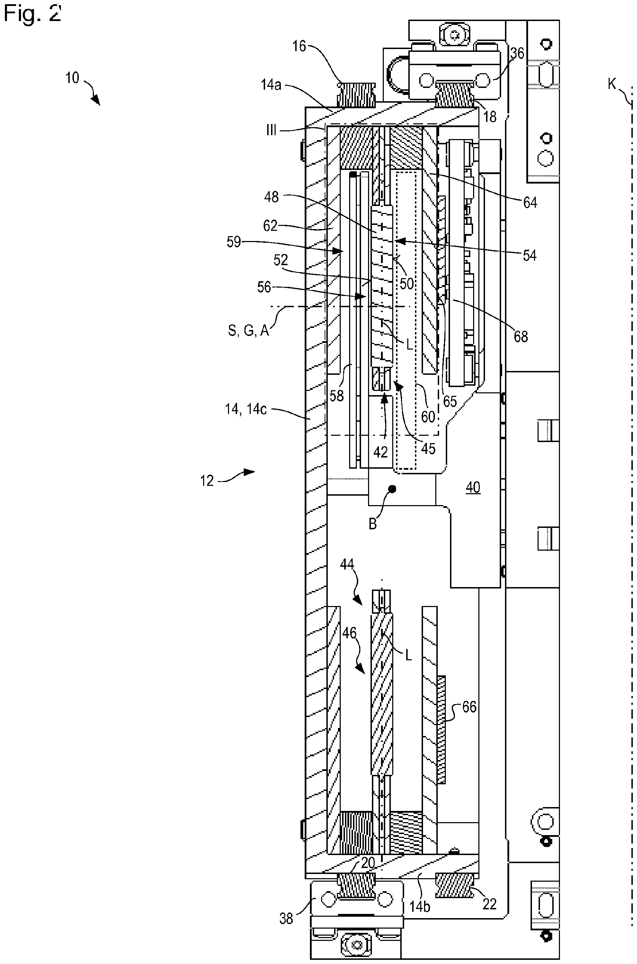

In den Figuren 1 bis 3 ist eine erfindungsgemäße Ausführungsform einer Pipettiervorrichtung der vorliegenden Anmeldung allgemein mit 10 bezeichnet. Die Pipettiervorrichtung10 weist ein Gerüst 12 auf, welches bezüglich des Aufstellungsorts der Pipettiervorrichtung 10 ortsfest ist. Im vorliegenden Beispiel ist der in den Figuren 1 und 2 gezeigte Tragabschnitt 14 des Gerüsts 12 aus einem C-förmigen Strangprofil aus einem unmagnetischen Werkstoff gebildet. Dies kann ein Kunststoff, insbesondere gefüllter Kunststoff sein. Bevorzugt ist es ein Metall, wie beispielsweise Aluminium.

An den Außenseiten seiner beiden parallelen Schenkeln 14a und 14b, welche durch eine Basis 14c miteinander verbunden sind, sind jeweils zwei Führungsschienen montiert (siehe Figur 2). Die Führungsschienen des in Figur 2 oberen Schenkels 14a haben die Bezugszeichen 16 und 18, die Führungsschienen des unteren Schenkels 14b haben die Bezugszeichen 20 und 22. In Figur 1 sind nur die dem Betrachter zugewandten Führungsschienen 18 und 22 erkennbar. Die beiden anderen Führungsschienen 16 und 20 sind durch die dargestellten Führungsschienen 18 und 22 verdeckt. Die Führungsschienen 16 bis 22, die gemeinsam eine Führungsanordnung 23 bilden, sind gewöhnliche Führungsschienen einer Linearführung.

Wie in Figur 1 zu erkennen ist, weist die Pipettiervorrichtung 10 eine Mehrzahl von Pipettiereinheiten auf, von welchen in Figur 1 stellvertretend vier Pipettiereinheiten 24, 26, 28 und 30 dargestellt sind. Die Pipettiereinheiten 24 bis 30 sind identisch aufgebaut, sodass die Beschreibung einer Pipettiereinheit für alle Pipettiereinheiten der Pipettiervorrichtung 10 gilt. Beispielhaft sei die auch in Figur 2 dargestellte Pipettiereinheit 30 herangezogen.

In an sich bekannter Weise weist die Pipettiereinheit 30 einen Pipettierkanal 32 auf, welcher sich längs einer Pipettierkanalachse K erstreckt. Die Pipettierkanalachsen K aller Pipettiereinheiten 24 bis 30 sind zueinander parallel und liegen bevorzugt in einer gemeinsamen Kanalachsenebene. Die Pipettierkanalachsen K sind parallel zur Zeichenebene der Figuren 1 und 2. An den Pipettierkanälen 24 bis 30 sind in an sich bekannter Weise Einweg-Pipettierspitzen 34 lösbar angekoppelt, in welche Flüssigkeit in ebenso bekannter Art und Weise aspiriert und aus welchen aspirierte Flüssigkeit dispensiert werden kann.

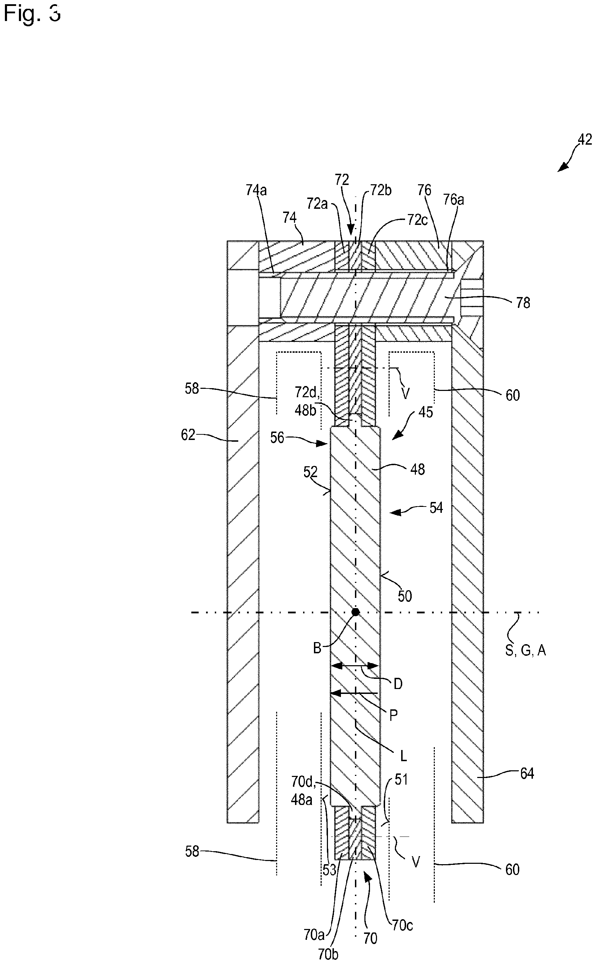

Die Pipettiereinheit 30 ist im Bereich des oberen Schenkels 14a durch einen oberen Führungswagen 36 und ist im Bereich des unteren Schenkels 14b durch einen unteren Führungswagen 38 zur Bewegung längs der durch die Führungsschienen 16 bis 22, bzw. durch die Führungsanordnung 23, definierten Bewegungsachse B geführt. Die Bewegungsachse B verläuft parallel zur Zeichenebene von Figur 1 und orthogonal zu den Zeichenebenen der Figuren 2 und 3. Zur Erzielung eines vorteilhaften, möglichst großen Führungsabstands sind die Führungswagen 36 und 38 der Pipettiereinheit 30 an sich bezüglich der Bewegungsachse B diametral gegenüberliegenden Führungsschienen 18 und 20 geführt. Sie haben somit sowohl längs der Pipettierkanalachse K als auch orthogonal zu dieser einen Abstand voneinander.

Wie in Figur 2 zu erkennen ist, sind die vier Führungsschienen 16 bis 22 derart angeordnet, dass sie die Kanten einer Mantelfläche eines imaginären Quaders bilden. Jede Pipettiereinheit der Pipettiervorrichtung 10 ist dabei an zwei auf einer längs der Bewegungsachse B verlaufenden Diagonalebene gelegenen Führungsschienen geführt. Längs der Bewegungsachse B unmittelbar aufeinanderfolgende Pipettiereinheiten sind dabei alternierend an vollständig unterschiedlichen Paaren von Führungsschienen geführt, wobei die zu einer Bezugs-Pipettiereinheit längs der Bewegungsachse B übernächste Pipettiereinheit durch dasselbe Paar von Führungsschienen geführt ist, wie die Bezugs-Pipettiereinheit. So sind die Pipettiereinheiten 24 und 28 an den Führungsschienen 16 und 22 geführt, während die Pipettiereinheiten 26 und 30 an den Führungsschienen 18 und 20 geführt sind. Die Führungswagen eines jeden Paars von Führungswagen, das eine Pipettiereinheit auf einem Paar von Führungsschienen führt, haben somit sowohl längs der Pipettierkanalachse K als auch orthogonal zu dieser einen Abstand voneinander.

Zur noch weiteren Erhöhung des Führungsabstandes der Führungswagen einer Pipettiereinheit sind diese bevorzugt auch längs der Bewegungsachse B mit Abstand voneinander angeordnet, wenngleich der längs der Bewegungsachse B realisierte Abstand im vorliegenden Ausführungsbeispiel erheblich kleiner ist als der orthogonal zur Bewegungsachse B realisierte Führungsabstand.

Die Führungswagen 36 und 38 der Pipettiereinheit 30 sind durch einen Pipettiereinheit-Rahmen 40 miteinander zur gemeinsamen Bewegung gekoppelt. An dem Rahmen 40 ist der Pipettierkanal 32 gehaltert, der in den Figuren 2 und 3 nicht gesondert dargestellt ist, dessen Pipettierkanalachse K jedoch hinsichtlich ihrer relativen Orientierung auch in Figur 2 gezeigt ist.

Die Pipettiereinheiten 24 bis 30 sind jeweils linearmotorisch zur Bewegung längs der Bewegungsachse B angetrieben. Die Pipettiervorrichtung 10 weist hierzu insgesamt zwei Statoren 42 und 44 auf, welche im Wesentlichen gleich aufgebaut und lediglich spiegelbildlich oder um 180° relativ zueinander verdreht im Tragabschnitt 14 des Gerüsts 12 angeordnet sind. Aus diesem Grunde reicht es aus, lediglich den in Figur 2 oberen Stator 42 zu beschreiben, dessen Beschreibung auch auf den unteren Stator 44 anwendbar ist.

Zur Beschreibung des Stator 42 wird auf die Figur 3 verwiesen, die den oberen Stator 42 vergrößert zeigt.

Der Stator 42 weist als zentrales Bauteil eine orthogonal zur Zeichenebene der Figuren 2 und 3 und damit längs der Bewegungsachse B verlaufende Stator-Magnetanordnung 45 auf. Die Stator-Magnetanordnung 45 umfasst längs der Bewegungsachse B aufeinanderfolgende Permanentmagnete 48, welche im Wesentlichen identisch ausgebildet und lediglich aufeinanderfolgend mit alternierender Polarisierungsrichtung P angeordnet sind. Die Permanentmagnete 48 sind im dargestellten Ausführungsbeispiel in ihrer Dickenrichtung D polarisiert, wobei definitionsgemäß in der Polarisierungsrichtung P der magnetische Südpol auf den magnetischen Nordpol des jeweiligen Permanentmagneten 48 folgt. Die Polarisierungsrichtung P des in Figur 3 dargestellten Permanentmagneten 48 verläuft von rechts nach links, d. h. der magnetische Nordpol des Permanentmagneten 48 liegt auf dessen rechter Körperseite und der magnetische Südpol entsprechend auf dessen linker Körperseite. Der Permanentmagnet 48 und somit die Stator-Magnetanordnung 45 insgesamt ist bezüglich einer längs der Bewegungsachse B und orthogonal zur Dickenrichtung D verlaufenden Längsmittelebene L körperlich spiegelsymmetrisch ausgebildet. Die Längsmittelebene L bildet auch die Trennebene zwischen den magnetischen Polen, sodass der Permanentmagnet 48 und die Stator-Magnetanordnung 45 insgesamt bezüglich der Längsmittelebene L nur körperlich, jedoch nicht magnetisch spiegelsymmetrisch sind.

Der Permanentmagnet 48 und die Stator-Magnetanordnung 45 insgesamt sind außerdem bezüglich einer zur Längsmittelebene L orthogonalen Dicken-Mittelebene als Dicken-Symmetrieebene S sowohl körperlich als auch magnetisch spiegelsymmetrisch ausgebildet.

Das Besondere an der Stator-Magnetanordnung 45 ist, dass sie nicht nur eine freiliegende Außenfläche 50, sondern zwei einander gegenüberliegende freiliegende Außenflächen 50 und 52 aufweist. Jeder dieser Außenflächen 50 und 52 liegt an der fertig montierten, betriebsbereiten Pipettiervorrichtung 10 eine Endfläche 51 bzw. 53 einer Läufer-Magnetanordnung 58 bzw. 60 gegenüber (siehe Figur 3). Die Stator-Magnetanordnung 45 weist somit zwei Magnetpol-Wirkseiten 54 und 56 auf, eine an jeder Außenfläche 50 bzw. 52. Somit ist das von der Stator-Magnetanordnung 45 ausgehende Magnetfeld auf beiden entgegengesetzten Seiten 54 und 56 der Stator-Magnetanordnung 45 zur Erzeugung einer Antriebskraft nutzbar.

In Figur 2 ist die hinter der Schnittebene II-II gelegene Läufer-Magnetanordnung 58 der Pipettiereinheit 30 dargestellt, die, zur gemeinsamen Bewegung mit dem Pipettiereinheit-Rahmen 40 verbunden, mit ihrer Endfläche 53 (s. Fig. 3) der Magnetpol-Wirkseite 56 der oberen Stator-Magnetanordnung 45 unter Bildung eines geringfügigen Luftspalts längs einer Spaltachse G gegenüberliegt. Die Läufer-Magnetanordnung 58 umfasst eine in Figur 2 nicht erkennbare Spulenanordnung aus wenigstens drei Spulen, die unterschiedlichen, zueinander verschobenen elektrischen Phasen zugeordnet sind.

Der Stator 42 und die Läufer-Magnetanordnungen 58 und 60 bilden eine Linearantriebsanordnung 59.

In Figur 2 ist strichliniert eine vor der Schnittebene II-II liegende Läufer-Magnetanordnung 60 der Pipettiereinheit 26 dargestellt, welche zwar mit der gleichen Stator-Magnetanordnung 45 zusammenwirkt wie die Läufer-Magnetanordnung 58, jedoch mit deren anderer Magnetpol-Wirkseite 54. Dieser Magnetpol-Wirkseite 54 liegt die Endfläche 51 der Läufer-Magnetanordnung 60 gegenüber (s. Fig. 3). Die Läufer-Magnetanordnungen 58 und 60, welche längs einer Abstandsachse A voneinander mit Abstand angeordnet sind, sind zwangsläufig längs der Bewegungsachse B zueinander versetzt. Dieser Versatz soll vorliegend bei der Bestimmung der Abstandsachse A jedoch keine Rolle spielen. Die Abstandsachse A ist stets orthogonal zur Bewegungsachse B. Die Abstandsachse A ist vorliegend koaxial bzw. parallel zu den Spaltachsen G, wobei die Spaltachsen G beider Läufer-Magnetanordnungen 58 und 60 parallel sind. Somit liegt die Stator-Magnetanordnung 45 zwischen den orthogonal zur Bewegungsachse B und insbesondere längs der zu den Außenflächen 50 und 52 der Stator-Magnetanordnung 45 orthogonalen Abstandsachse A mit Abstand voneinander angeordneten Läufer-Magnetanordnungen 58 und 60 unterschiedlicher Pipettiereinheiten 30 bzw. 26.

Es sei lediglich der Vollständigkeit halber darauf hingewiesen, dass die Läufer-Magnetanordnung 60 alternativ mit derselben Pipettiereinheit 30 zur gemeinsamen Bewegung verbunden sein kann wie die Läufer-Magnetanordnung 58. Dann kann wegen der beidseitigen Ausnutzung des von der Stator-Magnetanordnung 45 ausgehenden Magnetfelds bei ansonsten gleichen Abmessungen der Pipettiereinheit 30 eine höhere, im Idealfall eine doppelt so hohe Antriebskraft auf die Pipettiereinheit 30 ausgeübt werden wie dann, wenn die Pipettiereinheit 30 nur eine Läufer-Magnetanordnung 58 aufweist.

Dann, wenn wie im dargestellten Ausführungsbeispiel jede Pipettiereinheit nur eine Läufer-Magnetanordnung aufweist, kann durch die doppelseitig nutzbare Stator-Magnetanordnung 45 bzw. 46 bei gleicher Bauweise hinsichtlich Führungsanordnung 23 und Stator-Magnetanordnungen 45 und 46 eine doppelt so hohe Anzahl linearmotorisch angetriebenem Pipettiereinheiten an der Pipettiervorrichtung 10 angeordnet sein, verglichen mit dem Fall, dass jede der Stator-Magnetanordnungen 45 und 46 jeweils nur eine Magnetpol-Wirkseite aufweist.

Die Längsmittelebenen L der beiden Stator-Magnetanordnungen 45 und 46 liegen dabei komplanar in einer gemeinsamen Ebene.

Die Bereitstellung der Stator-Magnetanordnungen 45 und 46 mit freiliegenden Außenflächen zur Bildung von Magnetpol-Wirkseiten erfordert eine besondere Konstruktion der zugehörigen Statoren 42 und 44. Wie in Figur 3 gezeigt ist, ist die Stator-Magnetanordnung 41 in ihrer sowohl zur Bewegungsachse B als auch zur Dickenrichtung D orthogonalen Breitenrichtung - das ist neben der Bewegungsachse die zweite Erstreckungsrichtung der Längsmittelebene L - von mit Abstand voneinander angeordneten Halteleisten 70 und 72 gehaltert.

Die Halteleisten 70 und 72 umfassen jeweils zwei äußere Lamellen-Leistenbauteile 70a und 70c bzw. 72a und 72c, welche zwischen sich jeweils ein mittleres Lamellen-Leistenbauteil 70b bzw. 72b aufweisen. Die Lamellen-Leistenbauteile 70a bis 70c und 72a bis 72c sind aus unmagnetischem Material hergestellt. Die Lamellen-Leistenbauteile 70a bis 70c und 72a bis 72c sind längs einer Stapelachse V paketiert und folgen längs der Stapelachse V aufeinander. Die Stapelachse V ist orthogonal zu den zueinander jeweils parallelen Haupterstreckungsebenen der Lamellen-Leistenbauteile 70a bis 70c und 72a bis 72c. Die mittleren Lamellen-Leistenbauteile 70b und 72b sind orthogonal zur Bewegungsachse B und orthogonal zur Stapelachse V kürzer ausgeführt als die sie jeweils außen einfassenden Lamellen-Leistenbauteile 70a und 70c bzw. 72a und 72c. So kann an jeder Halteleiste 70 und 72 eine längs der Bewegungsachse B verlaufende Fixiernut 70d bzw. 72d gebildet sein. In diese Fixiernuten 70d und 72d ragt jeweils ein Fixiervorsprung 48a bzw. 48b des Permanentmagneten 48 ein, welche Fixiervorsprünge 48a und 48b im dargestellten Ausführungsbeispiel einstückig mit dem Permanentmagneten 48 ausgebildet sind. Die in die Fixiernuten 70d und 72d einragenden Fixiervorsprünge 48a und 48b sind somit formschlüssig durch die Halteleisten 70 und 72 gehalten. Zusätzlich können die Fixiervorsprünge 48a und 48b durch Klebstoff adhäsiv an den Halteleisten 70 und 72 gesichert sein.

Die Halteleiste 72 ist unter Zwischenanordnung von Distanzelementen 74 und 76 durch eine Schraube 78 zwischen Abschirmungen 62 und 64 geklemmt. Das Distanzelement 74 kann dabei ein Gewinde 74a aufweisen, in welches die Schraube 78 eingedreht ist, während das jeweils andere Distanzelement 76 eine Durchgangsöffnung 76a aufweisen kann.

Die Statoren 42 und 44 können wiederum durch übliche Befestigungsmittel, wie Schrauben und dergleichen, oder adhäsiv mit dem Gerüst 12 verbunden sein.

Wie in Figur 3 dargestellt ist, kann der Stator-Magnetanordnung 46 längs der Abstandsachse A bzw. längs der Spaltachse G mit Entfernung die Abschirmung 62 bzw. 64 gegenüberliegen. Eine dieser Abschirmungen, im dargestellten Beispiel die Abschirmung 64, kann auf ihrer von der Stator-Magnetanordnung 46 weg weisenden Seite einen Längenmaßstab 65 aufweisen, welcher im Betrieb der Pipettiervorrichtung 10 von einem Lesekopf 68 zur Positionsbestimmung der jeweiligen Pipettiereinheit längs der Bewegungsachse B abgetastet wird.

Der Lesekopf 68 kann Steuerelektronik zur Steuerung der Bestromung der Läufer-Magnetanordnung 58 aufweisen.

Von den vier in Figur 1 dargestellten Pipettiereinheiten 24 bis 30 ist jede über ihre jeweilige Läufer-Magnetanordnung einer anderen Magnetpol-Wirkseite der beiden Stator-Magnetanordnungen 45 und 46 zugeordnet und wirkt mit dieser zur Erzeugung einer Antriebskraft zusammen.

## Patentansprüche

1. Pipettiervorrichtung (10) mit
- wenigstens einer Pipettiereinheit (24, 26, 28, 30), welche einen Pipettierkanal (32) aufweist,
- einer Führungsanordnung (23) mit wenigstens einer Führungsschiene (16, 18, 20, 22), an welcher die wenigstens eine Pipettiereinheit (24, 26, 28, 30) zur Bewegung längs einer Bewegungsachse (B) geführt ist,
- einer Linearantriebsanordnung (59), durch welche die wenigstens eine Pipettiereinheit (24, 26, 28, 30) zur Bewegung längs der Bewegungsachse (B) antreibbar ist, wobei die Linearantriebsvorrichtung (59) einen relativ zur Führungsanordnung (23) ortsfesten Stator (42, 44) aufweist und wobei die wenigstens eine Pipettiereinheit (24, 26, 28, 30) einen relativ zum Stator (42, 44) längs der Bewegungsachse (B) beweglichen Läufer der Linearantriebsanordnung (59) bildet,
wobei der Stator (42, 44) eine fest mit der Führungsanordnung (23) verbundene Stator-Magnetanordnung (45, 46) aufweist, wobei die Stator-Magnetanordnung (45, 46) eine Mehrzahl von Magneten (48) umfasst, die längs der Bewegungsachse (B) mit alternierenden Polarisierungsrichtungen (P) aufeinander folgend angeordnet sind, und
wobei der Läufer wenigstens eine bestrombare elektromagnetische Läufer-Magnetanordnung (58, 60) aufweist, welche der Stator-Magnetanordnung (45) längs einer zur Bewegungsrichtung (B) orthogonalen Spaltachse (G) gegenüberliegt,
**dadurch gekennzeichnet, dass** die Pipettiervorrichtung (10) wenigstens zwei Läufer-Magnetanordnungen (58, 60) aufweist, welche mit derselben gemeinsamen Stator-Magnetanordnung (45) Antriebskraft erzeugend zusammenwirken und welche längs einer zur Bewegungsachse (B) orthogonalen Abstandsachse (A) mit Abstand voneinander angeordnet sind, wobei sich die gemeinsame Stator-Magnetanordnung (45) zwischen den wenigstens zwei Läufer-Magnetanordnungen (58, 60) befindet.

2. Pipettiervorrichtung (10) nach Anspruch 1,
**dadurch gekennzeichnet, dass** die wenigstens eine Pipettiereinheit (24, 26, 28, 30) zwei längs der Abstandsachse (A) mit Abstand voneinander angeordnete Läufer-Magnetanordnungen (58, 60) aufweist, zwischen welchen sich die gemeinsame Stator-Magnetanordnung (45) befindet.

3. Pipettiervorrichtung (10) nach Anspruch 1 oder 2,
**dadurch gekennzeichnet, dass** sie wenigstens zwei gesonderte Pipettiereinheiten (24, 26, 28, 30) umfasst, welche jeweils einen Pipettierkanal (32) aufweisen und von welchen jede an der Führungsanordnung (23) längs der Bewegungsachse (B) zur Bewegung geführt ist, wobei unterschiedliche Pipettiereinheiten (24, 26, 28, 30) längs der Abstandsachse (A) mit Abstand voneinander angeordnete Läufer-Magnetanordnungen (58, 60) aufweisen, zwischen welchen sich die gemeinsame Stator-Magnetanordnung (45) befindet.

4. Pipettiervorrichtung (10) nach einem der vorhergehenden Ansprüche,
**dadurch gekennzeichnet, dass** die Spaltachsen (G), längs welcher die Läufer-Magnetanordnungen (58, 60), die längs der Abstandsachse (A) mit Abstand voneinander angeordnet sind, der gemeinsamen Stator-Magnetanordnung (45) gegenüberliegen, zueinander parallel sind.

5. Pipettiervorrichtung (10) nach Anspruch 4,
**dadurch gekennzeichnet, dass** die Spaltachsen (G) zur Abstandsachse (A) parallel sind.

6. Pipettiervorrichtung (10) nach Anspruch 4 oder 5,
**dadurch gekennzeichnet, dass** die Polarisierungsrichtungen (P) der Magnete (48) der gemeinsamen Stator-Magnetanordnung (45) parallel zu den Spaltachsen (G) verlaufen.

7. Pipettiervorrichtung (10) nach einem der vorhergehenden Ansprüche,
**dadurch gekennzeichnet, dass** der Stator (42, 44) eine längs der Bewegungsachse (B) verlaufende Halteleiste (70, 72) aufweist, welche mit längs der Bewegungsachse (B) aufeinander folgenden Magneten (48) der gemeinsamen Stator-Magnetanordnung (45) mechanisch oder/und adhäsiv verbunden ist.

8. Pipettiervorrichtung (10) nach Anspruch 7,
**dadurch gekennzeichnet, dass** der Stator (42, 44) in Entfernung von der Halteleiste (70) eine zu dieser parallele zweite Halteleiste (72) aufweist, welche mit längs der Bewegungsachse (B) aufeinander folgenden Magneten (48) der gemeinsamen Stator-Magnetanordnung (45) mechanisch oder/und adhäsiv verbunden ist, wobei die Halteleiste (70) und die zweite Halteleiste (72) die gemeinsame Stator-Magnetanordnung (45) zwischen sich halten.

9. Pipettiervorrichtung (10) nach Anspruch 8, unter Einbeziehung des Anspruchs 4,
**dadurch gekennzeichnet, dass** die Halteleiste (70) und die zweite Halteleiste (72) sowohl orthogonal zur Bewegungsachse (B) als auch orthogonal zu den Spaltachsen (G) der mit der gemeinsamen Stator-Magnetanordnung (45) zusammenwirkenden Läufer-Magnetanordnungen (58, 60) mit Abstand voneinander angeordnet sind.

10. Pipettiervorrichtung (10) nach einem der Ansprüche 8 oder 9,
**dadurch gekennzeichnet, dass** die Halteleiste (70) und die zweite Halteleiste (72) orthogonal zur Abstandsachse (A) voneinander entfernt angeordnet sind.

11. Pipettiervorrichtung (10) nach einem der Ansprüche 7 bis 10,
**dadurch gekennzeichnet, dass** die Halteleiste (70) oder/und die zweite Halteleiste (72) einen Fixierspalt, insbesondere eine Fixiernut (70d, 72d) definieren, in welchen ein von der Stator-Magnetanordnung (45) auskragender Fixiervorsprung (48a, 48b) einragt.

12. Pipettiervorrichtung (10) nach einem der der Ansprüche 7 bis 11,
**dadurch gekennzeichnet, dass** die Halteleiste (70) oder/und die zweite Halteleiste (72) aus einer Mehrzahl von Lamellen-Leistenbauteilen (70a, 70b, 70c, 72a, 72b, 72c) aufgebaut ist bzw. sind, welche längs einer zur Bewegungsachse (B) orthogonalen Stapelachse (V) aufeinander folgend angeordnet sind.

13. Pipettiervorrichtung (10) nach einem der vorhergehenden Ansprüche, unter Einbeziehung des Anspruchs 3,
**dadurch gekennzeichnet, dass** die Führungsanordnung (23) wenigstens vier parallele Führungsschienen (16, 18, 20, 22) aufweist, welche derart angeordnet sind, dass sie die Kanten einer Mantelfläche eines imaginären Prismas bilden, wobei für eine Mehrzahl von Pipettiereinheiten (24, 26, 28, 30) gilt, dass eine Pipettiereinheit (24, 26, 28, 30) an zwei Führungsschienen (16/22, 18/20) zur Bewegung geführt ist, zwischen welchen in jeder von zwei entgegengesetzten Umfangsrichtungen der Mantelfläche wenigstens eine weitere durch eine die jeweilige Pipettiereinheit (24, 26, 28, 30) nicht führende Führungsschiene (18/20, 16/22) definierte Kante gelegen ist.

14. Pipettiervorrichtung (10) nach Anspruch 13,
**dadurch gekennzeichnet, dass** längs der Bewegungsachse (B) unmittelbar aufeinander folgende Pipettiereinheiten (24, 26, 28, 30) an jeweils einem anderen Paar von Führungsschienen (16/22, 18/20) zur Bewegung geführt sind, wobei besonders bevorzugt für jeweils zwei längs der Bewegungsachse (B) unmittelbar aufeinander folgende Pipettiereinheiten (24/26, 26/28, 28/30) gilt, dass die sie jeweils führenden Paare von Führungsschienen (16/22, 18/20) keine gemeinsame Führungsschiene (16, 18, 20, 22) aufweist.

15. Pipettiervorrichtung (10) nach einem der vorhergehenden Ansprüche, unter Einbeziehung des Anspruchs 3,
**dadurch gekennzeichnet, dass** sie eine Mehrzahl von Stator-Magnetanordnungen (45, 46) aufweist, welche mit einer zur Bewegungsachse (B) orthogonalen Distanz voneinander angeordnet sind, wobei die Mehrzahl von Stator-Magnetanordnungen (45, 46) bevorzugt in einer gemeinsamen Erstreckungsebene angeordnet sind.

## Claims

1. A pipetting apparatus (10) having:
- at least one pipetting unit (24, 26, 28, 30) that comprises a pipetting conduit (32);
- a guidance arrangement (23) having at least one guidance rail (16, 18, 20, 22) on which the at least one pipetting unit (24, 26, 28, 30) is guided to move along a motion axis (B);
- a linear drive arrangement (59) with which the at least one pipetting unit (24, 26, 28, 30) is drivable to move along the motion axis (B), the linear drive apparatus (59) comprising a stator (42, 44) that is stationary relative to the guidance arrangement (23), and the at least one pipetting unit (24, 26, 28, 30) constituting a rotor, movable relative to the stator (42, 44) along the motion axis (B), of the linear drive arrangement (59);
the stator (42, 44) comprising a stator magnet arrangement (45, 46) connected fixedly to the guidance arrangement (23); the stator magnet arrangement (45, 46) encompassing a plurality of magnets (48) that are arranged to follow one another with alternating magnetic-pole orientations (P) along the motion axis (B); and
the rotor comprising at least one energizable electromagnetic rotor magnet arrangement (58, 60) that is located oppositely from the stator magnet arrangement (45) along a gap axis (G) orthogonal to the motion direction (B), **characterized in that** the pipetting apparatus (10) comprises at least two rotor magnet arrangements (58, 60) that interact in drive-force-generating fashion with the same common stator magnet arrangement (45) and that are arranged with a spacing from one another along a spacing axis (A) orthogonal to the motion axis (B), the common stator magnet arrangement (45) being located between the at least two rotor magnet arrangements (58, 60).

2. The pipetting apparatus (10) according to Claim 1,
**characterized in that** the at least one pipetting unit (24, 26, 28, 30) comprises two rotor magnet arrangements (58, 60), arranged with a spacing from one another along the spacing axis (A), between which the common stator magnet arrangement (45) is located.

3. The pipetting apparatus (10) according to Claim 1 or 2,
**characterized in that** it encompasses at least two separate pipetting units (24, 26, 28, 30), each of which comprises a pipetting conduit (32) and each of which is guided to move on the guidance arrangement (23) along the motion axis (B), different pipetting units (24, 26, 28, 30) comprising rotor magnet arrangements (58, 60) which are arranged with a spacing from one another along the spacing axis (A) and between which the common stator magnet arrangement (45) is located.

4. The pipetting apparatus (10) according to one of the preceding claims, **characterized in that** herein the gap axes (G) along which the rotor magnet arrangements (58, 60), arranged with a spacing from one another along the spacing axis (A), of the common stator magnet arrangement (45) are located opposite one another, are mutually parallel.

5. The pipetting apparatus (10) according to Claim 4,
**characterized in that** the gap axes (G) are parallel to the spacing axis.

6. The pipetting apparatus (10) according to Claim 4 or 5,
**characterized in that** the polarization directions (P) of the magnets (48) of the common stator magnet arrangement (45) proceed parallel to the gap axes (G).

7. The pipetting apparatus (10) according to one of the preceding claims, **characterized in that** the stator (42, 44) comprises a holding strip (70, 72) that proceeds along the motion axis (B) and is mechanically and/or adhesively connected to magnets (48) of the common stator magnet arrangement (45) which follow one another along the motion axis (B).

8. The pipetting apparatus (10) according to Claim 7,
**characterized in that** the stator (42, 44) comprises, at a distance from the holding strip (70), a second holding strip (72) parallel thereto that is mechanically and/or adhesively connected to magnets (48) of the common stator magnet arrangement (45) which follow one another along the motion axis (B), the holding strip (70) and the second holding strip (72) holding the stator magnet arrangement (45) between them.

9. The pipetting apparatus (10) according to Claim 8, including Claim 4, **characterized in that** the holding strip (70) and the second holding strip (72) are arranged with a spacing from one another both orthogonally to the motion axis (B) and orthogonally to the gap axes (G) of the rotor magnet arrangements (58, 60) that interact with the common stator magnet arrangement (45).

10. The pipetting apparatus (10) according to one of Claims 8 or 9, **characterized in that** the holding strip (70) and the second holding strip (72) are arranged at a distance from one another orthogonally to the spacing axis (A).

11. The pipetting apparatus (10) according to one of Claims 7 to 10, **characterized in that** the holding strip (70) and/or the second holding strip (72) define an immobilization gap, in particular an immobilization groove (70d, 72d) into which an immobilization projection (48a, 48b) that stands out from the stator magnet arrangement (45) protrudes.

12. The pipetting apparatus (10) according to one of Claims 7 to 11, **characterized in that** the holding strip (70) and/or the second holding strip (72) is/are constructed from a plurality of slat strip components (70a, 70b, 70c; 72a, 72, 72c) that are arranged to follow one another along a stacking axis (V) orthogonal to the motion axis (B).

13. The pipetting apparatus (10) according to one of the preceding claims, including Claim 3,
**characterized in that** the guidance arrangement (23) comprises at least four parallel guidance rails (16, 18, 20, 22) that are arranged in such a way that they form the edges of an enveloping surface of an imaginary prism, it being the case for a plurality of pipetting units (24, 26, 28, 30) that a pipetting unit (24, 26, 28, 30) is guided to move on two guidance rails (16/22, 18/20) between which, in each of two opposite circumferential directions of the enveloping surface, at least one further edge defined by a guidance rail (18/20, 16/22) that is not guiding the respective pipetting unit (24, 26, 28, 30) is located.

14. The pipetting apparatus (10) according to Claim 13,
**characterized in that** pipetting units (24, 26, 28, 30) that directly follow one another along the motion axis (B) are each guided to move on a different pair of guidance rails (16/22, 18/20), it being particularly preferably the case, for each two pipetting units (24/26, 26/28, 28/30) that directly follow one another along the motion axis (B), that the pairs of guidance rails (16/22, 18/20) which respectively guide them do not comprise a common guidance rail (16, 18, 20, 22).

15. The pipetting apparatus (10) according to one of the preceding claims, including Claim 3,
**characterized in that** it comprises a plurality of stator magnet arrangements (45, 46) that are arranged at a distance from one another which is orthogonal to the motion axis (B), the plurality of stator magnet arrangements (45, 46) preferably being arranged in one common plane of extent.

## Revendications

1. Dispositif de pipetage (10) avec
- au moins une unité de pipetage (24, 26, 28, 30) qui présente un canal de pipetage (32),
- un dispositif de guidage (23) avec au moins un rail de guidage (16, 18, 20, 22) sur lequel au moins une unité de pipetage (24, 26, 28, 30) est guidée pour se déplacer le long d'un axe de déplacement (B),
- un agencement d'entraînement linéaire (59) par lequel au moins une unité de pipetage (24, 26, 28, 30) peut être entraînée pour se déplacer le long de l'axe de déplacement (B), le dispositif d'entraînement linéaire (59) ayant un stator (42, 44) qui est fixe par rapport à l'agencement de guidage (23) , et dans lequel au moins une unité de pipetage (24, 26, 28, 30) forme un coulisseau de l'agencement d'entraînement linéaire (59) qui est mobile par rapport au stator (42, 44) le long de l'axe de déplacement (B),
dans lequel le stator (42, 44) a un ensemble d'aimant de stator (45, 46) connecté de manière fixe à l'ensemble de guidage (23), l'ensemble d'aimant de stator (45, 46) comprenant une pluralité d'aimants (48) s'étendant longitudinalement à l'axe de mouvement (B) avec des directions de polarisation alternées (P) disposées l'une après l'autre, et
dans lequel le rotor présente au moins un agencement d'aimants de rotor ayant une alimentation électromagnétique (58, 60) qui se trouve en face de l'agencement d'aimants de stator (45) le long d'un axe d'entrefer (G) orthogonal à la direction de déplacement (B),
**caractérisé par le fait que** le dispositif de pipetage (10) a au moins deux agencements d'aimants de rotor (58, 60) qui coopèrent avec le même agencement commun d'aimants de stator (45) pour générer une force d'entraînement et disposés à distance l'un de l'autre le long d'un axe de distance (A) orthogonal par rapport à l'axe de déplacement (B), l'agencement commun d'aimants de stator (45) est situé entre au moins deux ensembles d'aimants de rotor (58, 60).

2. Dispositif de pipetage (10) selon la revendication 1,
**caractérisé par le fait qu'**au moins une unité de pipetage (24, 26, 28, 30) présente deux agencements d'aimants rotoriques (58, 60) disposés à distance l'un de l'autre le long de l'axe d'écartement (A), entre lesquels se trouve l'agencement commun d'aimants de stator (45).

3. Dispositif de pipetage (10) selon la revendication 1 ou 2,
**caractérisé par le fait qu'**il comprend au moins deux unités de pipetage distinctes (24, 26, 28, 30) dont chacune comporte un canal de pipetage (32) et dont chacune est guidée sur l'agencement de guidage (23) le long de l'axe de mouvement (B) pour le mouvement, avec différentes unités de pipetage (24, 26, 28, 30) le long de l'axe de distance (A) ayant des agencements d'aimant de rotor (58, 60) disposés à distance entre lesquels se trouve l'agencement commun d'aimants de stator (45).

4. Dispositif de pipetage (10) selon l'une des revendications précédentes, **caractérisé par le fait que** les axes d'entrefer (G) le long desquels les agencements d'aimants rotoriques (58, 60) qui sont espacés le long de l'axe d'écartement (A) de l'agencement commun d'aimants de stator (45) sont opposés, sont parallèles les uns aux autres.

5. Dispositif de pipetage (10) selon la revendication 4,
**caractérisé par le fait que** les axes de fente (G) sont parallèles à l'axe de distance (A).

6. Dispositif de pipetage (10) selon la revendication 4 ou 5,
**caractérisé par le fait que** les directions de polarisation (P) des aimants (48) de l'agencement commun d'aimants de stator (45) sont parallèles aux axes d'entrefer (G).

7. Dispositif de pipetage (10) selon l'une des revendications précédentes, **caractérisé par le fait que** le stator (42, 44) présente une barre de maintien (70, 72) s'étendant le long de l'axe de déplacement (B) et reliée à des aimants (48) qui se suivent de l'agencement commun d'aimants de stator (45) mécaniquement et/ou par collage.

8. Dispositif de pipetage (10) selon la revendication 7,
**caractérisé par le fait que** le stator (42, 44) présente, à distance de la barre de maintien (70), une deuxième barre de maintien (72) qui lui est parallèle et qui est reliée mécaniquement et/ou par collage à des aimants (48) se succédant le long de l'axe de déplacement (B) de l'agencement commun d'aimants de stator (45), la barre de maintien (70) et la seconde barre de maintien (72) maintiennent entre elles l'agencement commun d'aimants de stator (45).

9. Dispositif de pipetage (10) selon la revendication 8, y compris la revendication 4,
**caractérisé par le fait que** la barre de maintien (70) et la deuxième barre de maintien (72) sont disposées à la fois orthogonalement à l'axe de déplacement (B) et orthogonalement aux axes de fente (G) des ensembles d'aimants de stator communs (45) et des ensembles d'aimants de rotor coopérants (58, 60) à distance les uns des autres.

10. Dispositif de pipetage (10) selon l'une des revendications 8 ou 9,
**caractérisé par le fait que** la barre de maintien (70) et la deuxième barre de maintien (72) sont disposées à distance l'une de l'autre orthogonalement à l'axe d'écartement (A).

11. Dispositif de pipetage (10) selon l'une des revendications 7 à 10,
**caractérisé par le fait que** la barre de maintien (70) et/ou la deuxième barre de maintien (72) définissent un interstice de fixation, notamment une rainure de fixation (70d, 72d) dans laquelle est insérée une saillie de fixation en saillie (48a, 48b) d'un agencement d'aimants de stator (45).

12. Dispositif de pipetage (10) selon l'une des revendications 7 à 11,
**caractérisé par le fait que** la barre de maintien (70) et/ou la deuxième barre de maintien (72) est/sont construites à partir de plusieurs éléments de barre lamellaire (70a, 70b, 70c, 72a, 72b, 72c), disposés les uns après les autres le long d'un axe d'empilement (V) orthogonal à l'axe de déplacement (B).

13. Dispositif de pipetage (10) selon l'une des revendications précédentes, y compris la revendication 3,
**caractérisé par le fait que** l'agencement de guidage (23) présente au moins quatre rails de guidage parallèles (16, 18, 20, 22) agencés de telle manière qu'ils forment les bords d'une surface latérale d'un prisme imaginaire, où, pour une pluralité d'unités de pipetage (24, 26, 28, 30), une unité de pipetage (24, 26, 28, 30) est guidée pour le mouvement sur deux rails de guidage (16/22, 18/20) entre lesquels se trouve au moins un autre bord défini par un rail de guidage (18/20, 16/22) non guidant à travers l'unité de pipetage respective (24, 26, 28, 30) dans chacune des deux directions circonférentielles opposées de la surface latérale.

14. Dispositif de pipetage (10) selon la revendication 13,
**caractérisé par le fait que** les unités de pipetage (24, 26, 28, 30) qui se succèdent directement le long de l'axe de déplacement (B) sont guidées pour le déplacement sur une paire différente de rails de guidage (16 /22, 18/20), où il est particulièrement préférable pour deux unités de pipetage (24/26, 26/28, 28/30) qui se succèdent directement le long de l'axe de déplacement (B) que les paires de rails de guidage (16/22, 18/20) ne présentent pas de rail de guidage commun (16, 18, 20, 22).

15. Dispositif de pipetage (10) selon l'une des revendications précédentes, y compris la revendication 3,
**caractérisé par le fait qu'**il présente une pluralité d'agencements d'aimants de stator (45, 46) disposés à une distance orthogonale les uns des autres à l'axe de déplacement (B), la pluralité d'agencements d'aimants de stator (45, 46) sont de préférence disposés dans un plan d'extension commun.
